# EUROPEAN PATENT APPLICATION

(11) **EP 4 517 140 A1**
(43) Date of publication of application: **05.03.2025**
(21) Application number: 24191561.0
(22) Date of filing: 29.07.2024
(51) Int. Cl.: F16J 15/44, F16J 15/453, F16C 33/80

(54) **SEALING DEVICE, AND BEARING UNIT WITH A SEALING DEVICE**

(30) Priority: 30.08.2023 DE 102023208289
(71) Applicant: Aktiebolaget SKF, 415 50 Göteborg (SE)
(72) Inventor: Zhou, Xiaobo, 3994 PV Houten (NL); Cheng, Xu, 3825 Amersfoort (NL)
(74) Representative: Schonecke, Mitja

(57) **Abstract**

Disclosed is a sealing device (1), comprising at least one seal holder (6), wherein the at least sealing holder (6) includes an annular sealing surface (14) that is configured to form together with a counter face a non-contacting seal, wherein the sealing surface (14) is arranged opposite of a counter face (16) such that a gap (18) is formed between the sealing surface (14) and the counter face (16), wherein the sealing surface (14) and/or the counter face (16) is at least partially provided with at least one oleophobic coating layer (20).

## Description

### Technical field of the invention

The present invention relates to a sealing device, in particular a non-contact sealing device. Furthermore, the present invention relates to a bearing unit with a sealing device.

### Background of the invention

Non-contact seals or sealing devices are often used in applications in which it is desired to reduce friction torque and/or to gain a maximal speed limit, for example in rolling bearings. However, non-contact seals may have higher risk of suffering lubricant leakage.

It is therefore object of the present invention to enhance a resistance of the sealing device to lubricant leakage.

### Summary of the invention

This object is solved by a sealing device according to claim 1.

In the following, a sealing device is provided. The sealing device is a non-contact sealing device and comprises at least one seal holder including an annular sealing surface that is configured to form together with a counter face a non-contacting seal, wherein the sealing surface is arranged opposite of counter face such that a gap is formed between the sealing surface and the counter face. The sealing device may comprise a single sealing surface or more than one sealing surface. For example, the seal holder may include a first annular sealing surface and a second annular sealing surface, which may be concentrically arranged. The counter face may be a part of an element to be sealed, such as a bearing component, a bearing ring, and/or an element attached to the element to be sealed, such as a sleeve, a nut, a rotating shaft, a housing, etc. or part of the sealing device, for example if the sealing device is configured as a cassette gasket. The gap may have a dimension between 0.1 mm and 5 mm, preferably between 0.23 mm and 2 mm.

In order to enhance a resistance of the sealing device to lubricant leakage the sealing surface and/or the counter face is at least partially provided with at least one oleophobic coating layer. Furthermore, a thickness of the oleophobic coating layer may be between 1 to 100 µm, preferable between 5 to 25 µm. Moreover, a plurality of oleophobic coating layers may be provided.

Preferably, the oleophobic coating layer may be made of a material having a low surface energy, wherein the surface energy is less than 0.030 N/m, preferably less than 0.020 N/m. For example, the oleophobic coating layer may include PFA, Teflon, silicone, but is not limited to these materials. Furthermore, the oleophobic coating layer may be applied by a sol-gel dip process, spraying, a plasma deposition process, or any other suitable process. Additionally, a curing process may be used, wherein a curing temperature is preferably between 50°C and 350°C, depending on a composition of the coating.

Preferably, the sealing surface and/or the counter face is at least partially provided with at least one second oleophobic coating layer. Moreover, a plurality of second oleophobic coating layers may be provided. The second oleophobic coating layer may be made of a material having a low surface energy, wherein the surface energy is less than 0.030 N/m, preferably less than 0.020 N/m. For example, the second oleophobic coating layer may include PFA, Teflon, silicone, but is not limited to these materials. The second oleophobic coating layer may further enhance the resistance of the sealing device to lubricant leakage. The material of the oleophobic coating layer and the material of the second oleophobic coating layer may be identical or different to one another. Furthermore, if the materials of the oleophobic coating layer and the second oleophobic coating layer are different, the oleophobic coating layers and the second oleophobic coating layers may be arranged alternatingly. Alternatively, the oleophobic coating layers and the second oleophobic coating layers may be grouped.

Preferably, at least one oleophobic coating layer and/or at least one second oleophobic coating layer may be provided on both the sealing surface and the counter face. This may further improve the resistance against leakage.

Moreover, the second oleophobic coating layer is spaced from the oleophobic coating layer in the radial direction of the annular sealing surface. Also, if a plurality of oleophobic coating layers and/or second oleophobic coating layers is provided, the coating layers may be spaced from another in the radial direction of the annular sealing surface. Alternatively, if the materials of the oleophobic coating layer and the second oleophobic coating layer are different, the oleophobic coating layers and the second oleophobic coating layers may touch or even overlap.

Also, the oleophobic coating layer and/or the at least one second oleophobic coating layer may have at least one gap in the circumferential direction. For example, the oleophobic coating layer and/or the at least one second oleophobic coating layer may be discontinuous in the circumferential direction. At least one gap in the oleophobic coating layer and/or the at least one second oleophobic coating layer may allow lubricant that accumulates between two oleophobic layers to be guided back towards its origin point such as an interior of a bearing.

Preferably, at least one gap in the oleophobic coating layer and at least one gap in the second oleophobic coating layers are alternately arranged to one another. This allow to still enhance a leakage resistance of the sealing device while simultaneous allowing lubricant trapped between two oleophobic coating layers to be guided back. If the sealing device has a plurality of oleophobic coating layers and/or the second oleophobic coating layers, at least one of the coating layers may be continuous in the continuous in the circumferential direction, while the other coating layers may have at least one gap in the circumferential direction. This allows to further enhance a leakage resistance of the sealing device.

Alternatively, the oleophobic coating layer and/or the at least one second oleophobic coating layer may be continuous in the circumferential direction. This has the advantage that the resistance of the sealing device against lubricant leakage can be further enhanced.

According to a further embodiment, the oleophobic coating layer and/or the at least one second oleophobic coating layer forms a pattern in a radial direction of the annular sealing surface. For example, the pattern can be a periodical pattern such as a sinus wave pattern, a saw tooth wave pattern, a square wave pattern, etc. This has the advantage that guiding structures for the lubricant may be formed by the oleophobic coating layer and/or at least one of the at least one second oleophobic coating layers. The pattern may be formed by discontinuous and/or continuous oleophobic coating layers.

Preferably, the oleophobic coating layer and/or the at least one second oleophobic coating layer may have a width a radial direction of the annular sealing surface. Furthermore, the width of the at least one oleophobic coating layer may be larger than 0.5 x a size of the gap between the sealing surface and the counter face. For example, the width may be between 0.1 to 5 mm. Moreover, the width of the oleophobic coating layer and/or the second oleophobic coating layer are equal to or different from each other. For example, a distance between two oleophobic coating layers may be between 1.5 to 5 times of the width of the oleophobic coating layers.

According to a further embodiment, each of the sealing surface and the counter face have at least one oleophobic coating layer and/or at least one second oleophobic coting layer. Preferably, the oleophobic coating layers and/or second oleophobic coting layers of the sealing surface and the oleophobic coating layers and/or second oleophobic coting layers of the counter face may be arranged in the radial direction of the sealing surface at the same radial position or at different radial positions. In other words, the at least one oleophobic coating layer of the sealing surface and the at least one oleophobic coating layer of the counter face are arranged on top of each other or offset to one another such that they alternate in the radial direction of the sealing surface.

Furthermore, the sealing surface and/or the counter face may be entirely coated with the oleophobic coating layer. This has the advantage of further increasing the resistance of the sealing device against lubricant leakage.

Preferably, the at least one oleophobic coating layer and/or the at least one second oleophobic coating layer is arranged in a groove and/or as an elevated pattern on the sealing surface and/or the counter face. A depth of the groove may be between 2 to 500 µm, preferably between 5 to 50 µm, and a groove width may be between 0.1 to 5 mm, preferably larger than 0.5 x the gap between the non-contact seal and counter face. By arranging the oleophobic coating layer and/or the at least one second oleophobic coating layers in a groove, the risk that the coating layer is worn away during bearing operation may be further reduced and the oleophobic coating inside the grooves may remain intact during operation. Alternatively or additionally, the at least one oleophobic coating layer and/or the at least one second oleophobic coating layer is arranged as an elevated pattern on the sealing surface and/or the counter face.

Moreover, it is also possible to provide the sealing surface and/or the counter face with grooves and coat the entire sealing surface and/or counter face. Grooves may reduce the risk that the coating is worn away during operation since the oleophobic coating inside the grooves will remain intact during bearing operation even if the coating on the remaining surface is worn away, and the coating inside the groove will provide function against lubricant leakage and contamination, even if parts of the coating on the sealing surface and/or counter face have been worn away.

According to a further aspect, a bearing unit is provided, which includes at least one rotating element, and at least one stationary element, wherein the bearing unit further comprises at least one sealing device as described above, wherein the sealing device is attached to one of the at least one rotating element and the at least stationary element, and the counter face is formed on the other one of the at least one rotating element and the at least stationary element.

Further preferred embodiments are defined in the dependent claims as well as in the description and the figures. Thereby, elements described or shown in combination with other elements may be present alone or in combination with other elements without departing from the scope of protection.

### Brief description of the drawings

In the following, preferred embodiments of the invention are described in relation to the drawings, wherein the drawings are exemplarily only, and are not intended to limit the scope of protection. The scope of protection is defined by the accompanied claims, only.

The figures show:
Fig. 1: a schematic view of a sealing device according to a first embodiment,
Fig. 2: a schematic view of a sealing device according to a second embodiment,
Fig. 3: a schematic view of a sealing device according to a third embodiment, and
Fig. 4: a schematic view of a sealing device according to a fourth embodiment,

### Detailed description of the invention

In the following same or similar functioning elements are indicated with the same reference numerals.

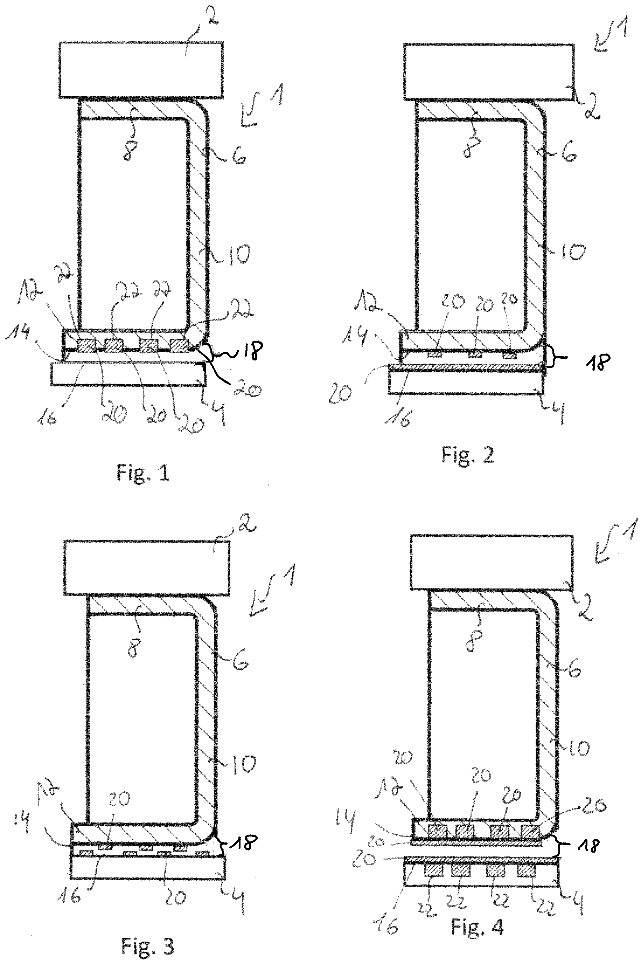

Fig. 1 shows a sealing device 1 according to a first embodiment. In Fig. 1, the sealing device 1 is arranged at an axial outer side of a rolling bearing having a rotating component 2 and a stationary component 4. In Fig. 1, the rotating component 2 is an inner ring. However, the rotating component can alternatively be a shaft, a sleeve, a nut securing the inner ring and/or the sleeve on the shaft, or the like. Furthermore, the stationary component 4 in Fig. 1 is an outer ring. However, the stationary component 4 can alternatively be a housing, a stub shaft, a sleeve, a nut securing the outer ring and/or the sleeve, or the like.

The sealing device 1 is attached to the rotating component 2 and comprises a seal holder 6 that includes an attaching portion 8 that extends in an axial direction of the bearing and that is configured to be attached, for example by press-fitting, to the rotating component 2. Furthermore, the seal holder comprises a radially extending shield portion 10 that is connected to the attaching portion 8, and an axially extending sealing portion 12 that is essentially parallel to the attaching portion 8 and connected to the shield portion 10. The seal holder 6 may be made from metal, for example steel. The attaching portion 8, the shield portion 10, and the sealing portion 12 may be integrally formed. Alternatively, the attaching portion 8, the shield portion 10, and the sealing portion 12 may be connected with each other by any suitable method, for example welding, adhesive bonding, by screws, or the like.

The sealing portion 12 of the seal holder has an annular sealing surface 14 that is arranged opposite of a counter face 16 and configured to form together with the counter face 16 a non-contacting seal, wherein a gap 18 is formed between the sealing surface 14 and the counter face 16. The counter face 16 in Fig. 1 is formed on the stationary component 4.

The gap 18 may have a dimension between 0.1 mm and 5 mm, preferably between 0.23 mm and 2 mm.

In order to enhance a resistance of the sealing device 1 to lubricant leakage the sealing surface 14 is provided with four oleophobic coating layers 20 that are each provided in a groove 22. A depth of the groove may be between 2 to 500 µm, preferably between 5 to 50 µm, and a groove width may be between 0.1 to 5 mm, preferably larger than 0.5 x the gap 18 between the sealing surface 14 and counter face 16.

Each coating layer 20 may have a thickness in the radial direction between 1 to 100 µm, preferable between 5 to 25 µm. Thus, the thickness of the coating layer 20 is preferably smaller that the depth of the groove 22. The oleophobic coating layers 20 are made from a material having a low surface energy, wherein the surface energy is less than 0.030 N/m, preferably less than 0.020 N/m. For example, the oleophobic coating layer 20 may include PFA, Teflon, silicone, but is not limited to these materials. Furthermore, the oleophobic coating layer may be applied by a sol-gel dip process, spraying, a plasma deposition process, or any other suitable process. Additionally, a curing process may be used, wherein a curing temperature is preferably between 50°C and 350°C, depending on a composition of the coating. It is also possible that in case of more than one oleophobic coating layers 20, as shown in Fig. 1, a subset of these oleophobic coating layers 20, is made from a different low surface energy material than the rest of the oleophobic coating layers 20.

As can be seen from Fig. 1, the oleophobic coating layers 20 are spaced from another in the radial direction of the annular sealing surface 14, i.e. the axial direction of the bearing. For example, a distance between two oleophobic coating layers 20 may be between 1.5 to 5 times of a width of the oleophobic coating layers 20. Each oleophobic coating layer 20 has a width a radial direction of the annular sealing surface, i.e. the axial direction of the bearing wherein the width of the coating layer 20 may be larger than 0.5 x a size of the gap 18 between the sealing surface 14 and the counter face 16. Preferably, the width may be between 0.1 to 5 mm. Moreover, the width of the oleophobic coating layers 20 may be equal to or different from each other.

At least one oleophobic coating layer 20 may have at least one gap in the circumferential direction. In other words, at least one oleophobic coating layer 20 may be discontinuous in the circumferential direction. Preferably, if two oleophobic coating layers 20 have at least one gap, the gaps may be alternately arranged to one another. This still allows to enhance a leakage resistance of the sealing device while simultaneous allowing lubricant trapped between two oleophobic coating layers 20 to be guided back towards a bearing interior. Alternatively or additionally, at least one oleophobic coating layer 20 may be continuous in the circumferential direction.

Fig. 2 shows a sealing device 1 according to a second embodiment, wherein the sealing device of Fig. 2 differs from the sealing device of Fig. 1 in that both the sealing surface 14 and the counter face 16 are provided with at least one oleophobic coating layer. As can be seen from Fig. 2, the oleophobic coating layer 20 on the counter face 16 coats the entire counter face 16, while the sealing surface 14 is provided with three oleophobic coating layer 20 that are separated from one another. Furthermore, in contrast to Fig. 1, the coating layers 20 are provided on top of each surface and not in a groove 22.

Fig. 3 shows a sealing device 1 according to a third embodiment, wherein the sealing device of Fig. 3 differs from the sealing device of Fig. 1 in that both the sealing surface 14 and the counter face 16 are provided with several oleophobic coating layers 20 that are all provided on top of each surface and not in a groove 22. As can be seen form Fig. 3, the oleophobic coating layers 20 of the sealing surface 14 and the oleophobic coating layers of the counter face 16 are arranged offset to one another such that they alternate in the radial direction of the sealing surface 14.

Fig. 4 shows a sealing device 1 according to a fourth embodiment, wherein the sealing device of Fig. 4 differs from the sealing device of Fig. 1 in that both the sealing surface 14 and the counter face 16 are provided with several oleophobic coating layers 20 that are each arranged in a grove 22. In addition, both the sealing surface 14 and the counter face 16 is entirely coated with an additional oleophobic coating layer 20.

Summarizing, by providing a coating layer 20 with low surface tension, namely an oleophobic coating, on at least one of the sealing surface 14 and the counter face 14, the lubricant leakage of non-contact seals can be prevented or at least reduced. By arranging at least one oleophobic coating layer 20 in a groove the risk that the coating layer is worn away during bearing operation is further reduced and the oleophobic coating inside the grooves may remain intact during operation.

### Reference numerals

- 1: sealing device
- 2: rotating component
- 4: stationary component
- 6: seal holder
- 8: attaching portion
- 10: shield portion
- 12: sealing portion
- 14: sealing surface
- 16: counter face
- 18: gap
- 20: oleophobic coating layer
- 22: groove

## Claims

1. Sealing device (1), comprising at least one seal holder (6), wherein the at least sealing holder (6) includes an annular sealing surface (14) that is configured to form together with a counter face a non-contacting seal, wherein the sealing surface (14) is arranged opposite of a counter face (16) such that a gap (18) is formed between the sealing surface (14) and the counter face (16), **characterized in that**
the sealing surface (14) and/or the counter face (16) is at least partially provided with at least one oleophobic coating layer (20).

2. Sealing device (1) according to claim 1, wherein the sealing surface (14) and/or the counter face (16) is at least partially provided with at least one second oleophobic coating layer (20).

3. Sealing device (1) according to claim 2, wherein the at least one second oleophobic coating layer (20) is spaced from the oleophobic coating layer (20) in the radial direction of the annular sealing surface (14).

4. Sealing device (1) according to any one of the previous claims, wherein the oleophobic coating layer (20) and/or the at least one second oleophobic coating layers (20) has at least one gap in the circumferential direction of the annular sealing surface (14).

5. Sealing device (1) according to any one of the claims 2 to 4, wherein at least one gap in the oleophobic coating layer (20) and at least one gap in the at least one second oleophobic coating layer (20) is alternately arranged to one another,

6. Sealing device (1) according to any one of the claims 1 to 3, wherein the oleophobic coating layer (20) and/or the at least one second oleophobic coating layer (20) is continuous in the circumferential direction of the annular sealing surface (14).

7. Sealing device (1) according to any one of the previous claims, wherein the oleophobic coating layer (20) and/or the at least one second oleophobic coating layer (20) forms a pattern in a radial direction of the annular sealing surface (14).

8. Sealing device (1) according to any one of the previous claims, wherein the oleophobic coating layer (20) and/or the at least one second oleophobic coating layer (20) has a width a radial direction of the annular sealing surface (14).

9. Sealing device (1) according to claim 8, wherein the width of the oleophobic coating layer (20) and the at least one second oleophobic coating layer (20) are equal to or different from each other.

10. Sealing device (1) according to any one of the previous claims, wherein the surface (14) and the counter face (16) have at least one oleophobic coating layer (20), and wherein the at least one oleophobic coating layer (20) of the sealing surface (14) and the at least one oleophobic coating layer (20) of the counter face (16) are arranged in the radial direction of the sealing surface (14) at the same radial position or at different radial positions.

11. Sealing device (1) according to any one of the previous claims, wherein the sealing surface (14) and/or the counter face (16) is entirely coated with the oleophobic coating layer (20).

12. Sealing device (1) according to any one of the previous claims, wherein the oleophobic coating layer (20) and/or the at least one second oleophobic coating layer (20) is arranged in a groove (22) and/or as an elevated pattern on the sealing surface (14) and/or the counter face (16).

13. Bearing unit, including at least one rotating element (2), and at least one stationary element (4), wherein the bearing unit further comprises at least one sealing device (1) according to any one of the previous claims, wherein the sealing device is attached to one of the at least one rotating element (2) and the at least stationary element (4), and the counter face (16) is formed on the other one of the at least one rotating element (2) and the at least stationary element (4).
